# EUROPÄISCHE PATENTSCHRIFT

(11) **EP 2 435 279 B1**
(45) Veröffentlichungstag und Bekanntmachung des Hinweises auf die Patenterteilung: **27.08.2014**
(21) Anmeldenummer: 11711553.5
(22) Anmeldetag: 30.03.2011
(51) Int. Cl.: B60R 16/03, H02J 7/00, H02J 7/14

(54) **BORDNETZ FÜR EIN FAHRZEUG SOWIE STEUERVORRICHTUNG FÜR EIN BORDNETZ**
ON-BOARD ELECTRICAL SYSTEM FOR A VEHICLE AND ALSO CONTROL APPARATUS FOR AN ON-BOARD ELECTRICAL SYSTEM
RÉSEAU DE BORD POUR UN VÉHICULE AINSI QUE DISPOSITIF DE COMMANDE POUR UN RÉSEAU DE BORD

(30) Priorität: 30.03.2010 DE 102010013458
(43) Veröffentlichungstag der Anmeldung: 04.04.2012
(73) Patentinhaber: Continental Automotive GmbH, 30165 Hannover (DE)
(72) Erfinder: REICHOW, Dirk, 93173 Wenzenbach (DE); STECKERMEIER, Tobias, 93059 Regensburg (DE); GALLI, Tobias, 93426 Roding (DE)
(86) Internationale Anmeldenummer: PCT/EP2011/054935
(87) Internationale Veröffentlichungsnummer: WO 2011/121035

(56) Entgegenhaltungen:
- EP-A1- 1 130 737
- EP-A2- 1 848 090
- WO-A1-2010/130527
- JP-A- 2002 330 545
- US-A- 5 387 857

## Beschreibung

Die Erfindung betrifft ein Bordnetz für ein Fahrzeug sowie eine Steuervorrichtung zum Steuern eines Stromflusses in einem Bordnetz eines Fahrzeugs. Ferner betrifft die Erfindung ein Fahrzeug, insb. ein Hybridelektrofahrzeug, mit einem oben genannten Bordnetz und/oder einer oben genannten Steuervorrichtung.

Bordnetze heutiger Kraftfahrzeuge umfassen einen als Drehstrommaschine mit nachgeschalteter Gleichrichterschaltung ausgebildeten Generator als Energiewandler, und/oder einen ersten bzw. primären Energiespeicher, welcher bspw. eine oder mehrere Batteriezellen umfasst, sowie über das Bordnetz zu versorgende Stromverbraucher, welche zusammengefasst als Systemlast bezeichnet werden. Der Generator, der erste Energiespeicher und die Systemlast werden zusammengefasst als erstes Energiesystem bezeichnet. Ferner umfassen die Bordnetze ein zweites Energiesystem, welches einen zweiten, also sekundären Energiespeicher umfasst, welcher bspw. als ein Doppelschichtkondensator ausgebildet ist. Der zweite Energiespeicher wird von dem ersten Energiespeicher, also von dem Generator und/oder von dem ersten Energiespeicher, mit Strom aufgeladen. Die Systemspannung des ersten Energiesystems ist in der Regel größer als die des zweiten Energiesystems.

Derartige Bordnetze sind beispielweise in Druckschriften JP 2002 330545 A, EP 1 848 090 A2, WO 2010/130527 A1, EP 1 130 737 A1 oder US 5 387 857 A beschrieben.

In einem Bordnetz ist es wichtig, einen weitgehend sicheren Systemzustand (auf Englisch: Safe-State) einzuhalten. Eine der Anforderungen zur Einhaltung eines sicheren Systemzustandes bei einem Bordnetz ist, ein Überladen eines der beiden Energiespeicher zu vermeiden. Treten jedoch Probleme in den elektrischen Verbindungen zwischen den beiden Energiesystemen, bzw. zwischen dem ersten Energiespeicher oder dem Generator und dem zweiten Energiespeicher ein, welche bspw. durch Fehler, Veralterungen oder Korrosionen bei einem oder anderen Elektrokomponenten im Bordnetz, durch Benutzungsfehler oder durch Umfeldeinflüsse in den elektrischen Verbindungen verursacht sind, so entsteht ein unkontrollierter Stromfluss von dem ersten Energiesystem zu dem zweiten Energiesystem bzw. von dem ersten Energiespeicher zu dem zweiten Energiespeicher, und folglich steigt die Ladespannung am zweiten Energiespeicher über die maximal zulässige Ladespannung hinaus und auf das Spannungspotential am ersten Energiesystem bzw. an dem ersten Energiespeicher. Das führt zu einem Überladen des zweiten Energiespeichers und folglich zum Ausfall des zweiten Energiespeichers.

Die Aufgabe der vorliegenden Erfindung liegt somit darin, eine Möglichkeit zu schaffen, den Energiespeicher eines Bordnetzes beim Eintreten eines der oben genannten Probleme auf einfache Weise vor einem Überladen zu schützen.

Diese Aufgabe wird durch die unabhängigen Ansprüche gelöst. Vorteilhafte Ausgestaltungen sind Gegenstand der Unteransprüche.

Gemäß einem ersten Aspekt der Erfindung wird ein Bordnetz geschaffen, welches zumindest einen Stromverbraucher, welcher als Systemlast bezeichnet wird, einen ersten und einen zweiten Energiespeicher zum Bereitstellen von Strom für die Systemlast umfasst, wobei der zweite Energiespeicher wiederaufladbar ausgeführt ist. Insb. kann der zweite Energiespeicher mit Strom von dem ersten Energiespeicher wiederaufgeladen werden.

Ferner umfasst das Bordnetz einen ersten, und einen zweiten, steuerbaren Schalter. In einem geschlossenen Schaltzustand stellt der erste Schalter einen ersten, geschlossenen Stromkreis von dem ersten Energiespeicher zu der Systemlast zur Versorgung der Systemlast mit Strom von dem ersten Energiespeicher her. In einem geöffneten Schaltzustand öffnet der erste Schalter diesen ersten Stromkreis wieder. In einem geschlossenen Schaltzustand und insbesondere bei zugleich geöffnetem, erstem Schalter stellt der zweite Schalter einen zweiten, geschlossenen Stromkreis von dem ersten Energiespeicher über den zweiten Energiespeicher zu der Systemlast zur Versorgung der Systemlast mit Strom von dem ersten Energiespeicher und von dem zweiten Energiespeicher her. In einem geöffneten Schaltzustand öffnet der zweite Schalter diesen zweiten Stromkreis wieder.

Das Bordnetz weist außerdem eine Überwachungseinrichtung und eine Steuereinrichtung auf. Mit der Überwachungseinrichtung erfasst das Bordnetz einen Ladespannungswert am zweiten Energiespeicher und vergleicht den aktuell erfassten Spannungswert mit einem vorgegebenen Spannungsschwellwert.

Die Steuereinrichtung schließt dann den ersten und den zweiten Schalter bzw. hält diese beiden Schalter in einem geschlossenen Schaltzustand, stellt so einen dritten geschlossenen Stromkreis von dem zweiten Energiespeicher über die beiden geschlossenen Schalter her und entlädt somit den zweiten Energiespeicher, wenn der aktuell erfasste Spannungswert den Spannungsschwellwert überschreitet. Vorteilhafterweise wird der zweite Energiespeicher über die beiden geschlossenen Schalter mit einer Masse elektrisch verbunden und entladen.

Dadurch ist ein Bordnetz geschaffen, welches beim Auftreten eines Fehlers im Bordnetz die Energiespeicher auf einfacher Weise und lediglich mit den im Bordnetz bereits vorhandenen Komponenten, wie den beiden Schaltern, vor einem Überladen schützen kann, sodass dieses Bordnetz mit kaum Mehrkosten oder höheren Fertigungsaufwand herstellbar ist.

In einer vorteilhaften Ausgestaltung weist das Bordnetz eine Nachladeeinrichtung auf, mit der das Bordnetz den zweiten Energiespeicher mit einem Ladestrom von dem ersten Energiespeicher auflädt.

Dies hat den Vorteil, dass das Bordnetz keine externe Nachladevorrichtung benötigt, um den einen Energiespeicher des Bordnetzes mit Strom von dem anderen Energiespeicher aufzuladen. Ein weiterer Vorteil ist, dass durch die interne Nachladeeinrichtung der Ladevorgang des Energiespeichers von dem Bordnetz ohne nennenswerte Latenzzeit überwacht, gesteuert und geregelt werden kann.

In einer weiteren vorteilhaften Ausgestaltung ist die Steuereinrichtung so ausgelegt, dass diese im Falle, dass der aktuell erfasste Spannungswert den Spannungsschwellwert überschreitet, den Strom, der von dem ersten Energiesystem zu dem zweiten Energiesystem bzw. von dem ersten Energiespeicher zu dem zweiten Energiespeicher fließt, über den ersten, geschlossenen und den zweiten, geschlossenen Schalter, somit über den dritten, geschlossenen Stromkreis ableitet. Vorteilhafterweise wird der Strom zur Masse (beispielsweise Fahrzeugkarosserie) abgeleitet.

Dies hat den Vorteil, dass der überschüssige, zu einem Überladen des zweiten Energiespeichers führende Strom vom ersten Energiesystem ohne zusätzliche Schaltungskomponenten und sicher von dem Bordnetz weg und zum Beispiel über die elektrische Masse entfernt werden kann.

In einer weiteren vorteilhaften Ausgestaltung bestimmt die Überwachungseinrichtung den Spannungsschwellwert, mit dem der Ladespannungswert verglichen wird, abhängig von zumindest einem auf Ladekapazität des zweiten Energiespeichers bezogenen Parameter, wie z. B. der Temperatur am zweiten Energiespeicher.

Dadurch wird der maximale Ladespannungswert des zweiten Energiespeichers, der abhängig von der Ladekapazität, bzw. von den verschiedenen Parametern, deren Spannungswerteänderungen zu einer Veränderung bei der Ladekapazität und somit auch bei dem maximal möglichen Ladespannungswert des zweiten Energiespeichers führen, bei Bestimmen des Spannungsschwellwertes mitberücksichtigt.

In einer weiteren vorteilhaften Ausgestaltung hält die Steuereinrichtung den ersten und den zweiten Schalter im geschlossenen Schaltzustand für eine vorgegebene Zeitdauer, wobei die Steuereinrichtung diese Zeitdauer in Abhängigkeit von dem aktuell erfassten Spannungswert in Vergleich mit dem Spannungsschwellwert vorgibt.

Dadurch wird einerseits sichergestellt, dass die überschüssigen elektrischen Ladungen im zweiten Energiespeicher, die zur Überladung bzw. zur Überspannung in diesem zweiten Energiespeicher führen, sicher entladen werden können, und anderseits wird verhindert, dass sich der zweite Energiespeicher zu viel entlädt, welches wiederum zu einem unnötigen Verlust der elektrischen Energie führt und somit nachteilig für das Bordnetz ist.

Gemäß einem weiteren Aspekt der Erfindung wird eine Steuervorrichtung zum Steuern eines Stromflusses in einem Bordnetz geschaffen, welche einen ersten, einen zweiten und einen dritten elektrischen Anschluss zur Herstellung von elektrischen Verbindungen von der Steuervorrichtung zu dem Bordnetz aufweist. Zwischen dem ersten und dem zweiten Anschluss weist die Steuervorrichtung einen ersten, steuerbaren Schalter auf, welcher in einem geschlossenen Zustand den ersten Anschluss mit dem zweiten Anschluss elektrisch verbindet. Zwischen dem ersten und dem dritten Anschluss weist die Steuervorrichtung einen zweiten steuerbaren Schalter auf, welcher in einem geschlossenen Zustand den ersten Anschluss mit dem dritten Anschluss elektrisch verbindet.

Ferner weist die Steuervorrichtung eine Überwachungseinrichtung und eine Steuereinrichtung auf. Die Überwachungseinrichtung, welche aufgrund derer Funktion zum Vergleichen zweier Spannungswerte auch als Vergleichseinrichtung bezeichnet werden kann, erfasst einen zwischen dem dritten und dem zweiten Anschluss der Steuervorrichtung anliegenden Spannungswert und vergleicht den aktuell erfassten Spannungswert mit einem vorgegebenen Spannungsschwellwert und gibt das Vergleichsergebnis in Form von einem Signal mit einem diesem Ergebnis entsprechenden Signalpegel an die Steuereinrichtung aus. Die Steuereinrichtung schließt bzw. hält dann abhängig von dem Signal bzw. abhängig von dem Vergleichsergebnis der Überwachungseinrichtung den ersten und den zweiten Schalter bzw. in einem geschlossenen Schaltzustand. Durch Schließen der beiden Schalter verbindet die Steuervorrichtung den dritten und den zweiten Anschluss elektrisch zueinander und leitet so den Strom von dem dritten Anschluss über diese beiden geschlossenen Schalter zu dem zweiten Anschluss ab.

In einer vorteilhaften Ausgestaltung bestimmt die Überwachungseinrichtung den Spannungsschwellwert, mit dem der Spannungswert verglichen wird, abhängig von zumindest einem Umfeldeinfluss, wie z. B. der Temperatur.

In einer weiteren vorteilhaften Ausgestaltung hält die Steuereinrichtung den ersten und den zweiten Schalter im geschlossenen Schaltzustand für eine vorgegebene Zeitdauer, welche die Steuereinrichtung in Abhängigkeit von dem aktuell erfassten Spannungswert in Vergleich mit dem Spannungsschwellwert vorgibt.

Gemäß einem weiteren Aspekt der vorliegenden Erfindung wird ein Fahrzeug, insb. ein Hybridelektrofahrzeug, mit einem oben beschriebenen Bordnetz oder einer oben beschriebenen Steuervorrichtung geschaffen.

Vorteilhafte Ausgestaltungen des oben dargestellten Bordnetzes sind, soweit im Übrigen auf die oben beschriebene Vorrichtung bzw. auf das oben genannte Fahrzeug übertragbar, auch als vorteilhafte Ausgestaltungen der Vorrichtung bzw. des Fahrzeugs anzusehen.

Im Folgenden wird die Erfindung anhand eines Ausführungsbeispiels unter Zuhilfenahme einer Figur näher erläutert. Als Beispiel dient ein Bordnetz eines Hybridelektrofahrzeugs.

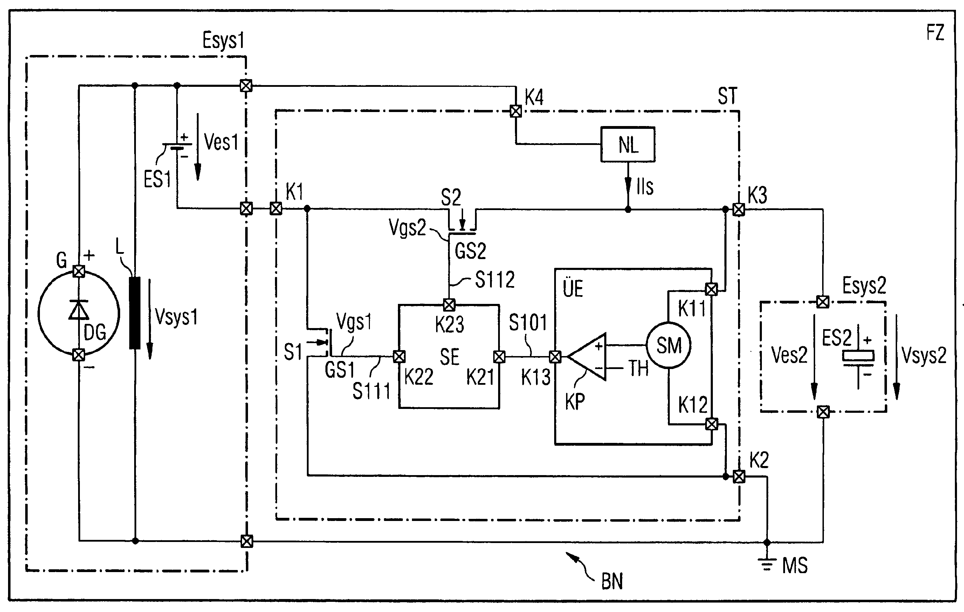

Es zeigt dabei eine einzige Figur eine schematische Darstellung eines Bordnetzes gemäß einem Ausführungsbeispiel.

Das Bordnetz BN eines Fahrzeugs FZ, insb. eines Hybridelektrofahrzeugs, gemäß der Figur umfasst ein erstes und ein zweites Energiesystem Esys1 und Esys2, sowie eine zwischen diesen beiden Energiesystemen Esys1, Esys2 zwischengeschaltete Steuervorrichtung ST. Die Energiesysteme Esys1, Esys2 in diesem beispielhaften Bordnetz BN sind zueinander potentialgebunden. Alternative Ausführungsformen mit voneinander potential getrennten Energiesystemen Esys1, Esys2 sind auch möglich.

Das erste Energiesystem Esys1 umfasst einen Generator G, einen ersten Energiespeicher ES1 des Bordnetzes BN, sowie eine Gruppe von Stromverbrauchern wie z. B Lampen oder Anlasser für Verbrennungsmotor, welche zusammengefasst als Systemlast L bezeichnet werden.

Der Generator G ist als Drehstrommaschine mit nachgeschalteter Gleichrichterschaltung DG ausgebildet und dient als Energiewandler zum Umwandeln der kinetischen Energie von dem Fahrzeug FZ in die elektrische Energie und zugleich als erste Energiequelle zum Versorgen der Systemlast L mit Strom.

Der erste Energiespeicher ES1 umfasst eine oder mehrere in Reihe geschalteten wiederaufladbaren Batteriezellen und dient als zweite Energiequelle zum Versorgen der Systemlast L mit Strom. Der erste Energiespeicher ES1 wird von dem Generator G mit Strom aufgeladen und speichert somit die von dem Generator G umgewandelte elektrische Energie.

Das zweite Energiesystem Esys2 umfasst einen weiteren also zweiten Energiespeicher ES2 des Bordnetzes BN. Der zweite Energiespeicher ES2 ist als Doppelschichtkondensator ausgebildet und dient als dritte Energiequelle ebenfalls zum Versorgen der Systemlast L mit Strom. Der zweite Energiespeicher ES2 wird von dem Generator G und/oder von dem ersten Energiespeicher ES1 mit Strom aufgeladen.

Die zwei Energiesysteme Esys1, Esys2 weisen unterschiedliche Systemspannungen Vsys1, Vsys2 auf, wobei die Systemspannung Vsys1 des ersten Energiesystem Esys1 höher als die Systemspannung Vsys2 des zweiten Energiesystems Esys2 ist.

In einem fehlerfreien Betriebszustand, in dem die Systemlast L von dem Generator G und dem ersten Energiespeicher ES1 mit Strom versorgt wird, ist die erste Systemspannung Vsys1 des ersten Energiesystems Esys1 identisch wie die Ladespannung Ves1 des ersten Energiespeichers ES1. Die zweite Systemspannung Vsys2 ist gleich der Ladespannung Ves2 des zweiten Energiespeichers ES2.

Die Steuerung von Stromfluss in dem jeweiligen Energiesystem Esys1, Esys2 sowie zwischen diesen beiden Energiesystemen Esys1, Esys2 wird von der Steuervorrichtung ST bewirkt. Hierzu weist die Steuervorrichtung ST vier elektrische Anschlüsse K1, K2, K3, K4 auf, welche zur Herstellung von elektrischen Verbindungen von der Steuervorrichtung ST zu dem Bordnetz BN bzw. zu den beiden Energiesystemen Esys1, Esys2, dienen.

Über den ersten elektrischen Anschluss K1 ist die Steuervorrichtung ST mit dem Minuspol des ersten Energiespeichers ES1 elektrisch verbunden.

Über den zweiten elektrischen Anschluss K2 ist die Steuervorrichtung ST mit dem Minuspol des Gleichrichters DG des Generators G, mit dem Minuspol des zweiten Energiespeichers ES2, mit der Systemlast L, sowie mit elektrischer Masse MS elektrisch verbunden.

Über den dritten elektrischen Anschluss K3 ist die Steuervorrichtung ST mit dem Pluspol des zweiten Energiespeichers ES2 elektrisch verbunden. Somit liegt zwischen dem dritten Anschluss K3 und dem zweiten Anschluss K2 die Spannung zwischen dem Pluspol und dem Minuspol des zweiten Energiespeichers ES2, also die Ladespannung Ves2 des zweiten Energiespeichers ES2, an.

Über den vierten elektrischen Anschluss K4 ist die Steuervorrichtung ST mit dem Pluspol des Gleichrichters DG des Generators G, mit dem Pluspol des ersten Energiespeichers ES1, sowie mit der Systemlast L elektrisch verbunden.

Die Steuervorrichtung ST umfasst ferner einen ersten und einen zweiten, steuerbaren Schalter S1, S2, eine Steuereinrichtung SE zum Steuern der beiden Schalter S1 und S2, eine Überwachungseinrichtung ÜE zum Überwachen der Ladespannung Ves2 von dem zweiten Energiespeicher ES2 sowie eine Nachladeeinrichtung NL zum Aufladen des zweiten Energiespeichers ES2 mit Strom von dem Generator G und/oder von dem ersten Energiespeicher ES1.

Die beiden Schalter S1 und S2 sind als über den jeweiligen Gate- bzw. Steueranschluss GS1, GS2 steuerbarer, selbstsperrender MOSFET-Halbleiterschalter ausgebildet. Beim Anliegen einer Gatespannung bzw. Steuerspannung Vgs1, Vgs2 am jeweiligen Steueranschluss GS1, GS2 mit einem Spannungswert von z. B. 5V sind diese beiden Schalter S1, S2 leitend, also gehen in einen "geschlossenen" Schaltzustand über, und beim Wegfall der Steuerspannung Vgs1, Vgs2 oder beim Anliegen einer Steuerspannung Vgs1, Vgs2 mit einem nicht ausreichenden Spannungswert von bspw. unter 5V sind diese sperrend, also gehen in einen "geöffneten" Schaltzustand über.

Der erste Schalter S1 ist zwischen dem ersten und dem zweiten Anschluss K1, K2 angeordnet und verbindet in einem geschlossenen Schaltzustand den ersten und den zweiten Anschluss K1 und K2 elektrisch miteinander. Somit stellt der erste Schalter S1 im geschlossenen Schaltzustand einen ersten geschlossenen Stromkreis von dem ersten Energiespeicher ES1 zu der Systemlast L her, sodass die Systemlast L von dem ersten Energiespeicher ES1 mit Strom versorgt wird. In einem geöffneten Schaltzustand unterbricht der erste Schalter S1 die elektrische Verbindung von dem ersten Energiespeicher ES1 zu der Systemlast L, sodass der geschlossene erste Stromkreis geöffnet wird.

Der zweite Schalter S2 ist zwischen dem ersten und dem dritten Anschluss K1, K3 angeordnet und verbindet in einem geschlossenen Schaltzustand den ersten und den dritten Anschluss K1 und K3 elektrisch miteinander. Damit verbindet der zweite Schalter S2 im geschlossenen Schaltzustand und bei gleichzeitig geöffnetem erstem Schalter S1 den zweiten Energiespeicher ES2 mit dem ersten Energiespeicher ES1 und mit der Systemlast L elektrisch und stellt so einen zweiten geschlossenen Stromkreis von dem ersten Energiespeicher ES1 über den zweiten Energiespeicher ES2 und zu der Systemlast L her. In einem geöffneten Schaltzustand unterbricht der zweite Schalter S2 die elektrische Verbindung von dem zweiten Energiespeicher ES2 zu dem ersten Energiespeicher ES1 und zu der Systemlast L, sodass der geschlossene zweite Stromkreis geöffnet wird.

Die Ansteuerung der beiden Schalter S1, S2 erfolgt über die Steuereinrichtung SE. Die Steuereinrichtung SE weist einen Signaleingang K21 und zwei Signalausgänge K22, K23 auf. Über den Signaleingang K21 ist die Steuereinrichtung SE mit der Überwachungseinrichtung ÜE elektrisch verbunden. Über den ersten Signalausgang K22 bzw. mit einem ersten Ausgangssignal S111 am ersten Signalausgang K22 steuert die Steuereinrichtung SE den ersten Schalter S1 und über den zweiten Signalausgang K23 bzw. mit einem zweiten Ausgangssignal S112 am zweiten Signalausgang K23 den zweiten Schalter S2.

Die Überwachungseinrichtung ÜE weist zwei Signaleingänge K11, K12 und einen Signalausgang K13 auf. Über den ersten Signaleingang K11 ist die Überwachungseinrichtung ÜE mit dem dritten Anschluss K3 der Steuervorrichtung ST und somit auch mit dem Pluspol des zweiten Energiespeichers ES2 elektrisch verbunden. Über den zweiten Signaleingang K12 ist die Überwachungseinrichtung ÜE mit dem zweiten Anschluss K2 der Steuervorrichtung ST und somit auch mit dem Minuspol des zweiten Energiespeichers ES2 und der elektrischen Masse MS elektrisch verbunden. Über den Signalausgang K13 ist die Überwachungseinrichtung ÜE mit dem Signaleingang K21 der Steuereinrichtung SE elektrisch verbunden.

Zwischen den beiden Signaleingängen K11, K12 weist die Überwachungseinrichtung eine Spannungsmesseinheit SM auf, welche eine Potentialdifferenz zwischen den beiden Signaleingängen K11 und K12, somit den Ladespannungswert Ves2 des zweiten Energiespeichers ES2 misst. Zwischen der Spannungsmesseinheit SM und dem Signalausgang K13 der Überwachungseinrichtung ÜE weist die Überwachungseinrichtung ÜE ferner eine Komparatoreinheit KP auf. Über den nicht invertierenden, positiven Eingang ist die Komparatoreinheit KP mit der Spannungsmesseinheit SM elektrisch verbunden. Am invertierenden, negativen Eingang der Komparatoreinheit KP wird ein Spannungsschwellwert TH angelegt. Die Komparatoreinheit KP vergleicht den am positiven Eingang anliegenden, aktuell gemessenen Ladespannungswert Ves2 mit dem am negativen Eingang anliegenden Spannungsschwellwert TH, und gibt abhängig von dem Vergleichsergebnis ein Signal S101 mit einem dem Vergleichsergebnis entsprechenden Signalpegel über den Signalausgang K13 aus.

Die Nachladeeinrichtung NL ist zwischen dem vierten und dem dritten Anschluss K4 und K3 der Steuervorrichtung ST angeordnet und umfasst einen in der Figur nicht näher dargestellten DC/DC-Wandler. Über diese Nachladeeinrichtung NL wird der zweite Energiespeicher ES2 mit Strom von dem Generator G und/oder von dem ersten Energiespeicher ES1 aufgeladen.

Nachdem nun die in Figur dargestellten Komponenten des Bordnetzes BN des Ausführungsbeispiels, sowie deren Funktionen beschrieben wurden, wird nachfolgend die Funktionsweise des Bordnetzes BN bzw. der Steuervorrichtung ST des Bordnetzes BN näher beschrieben.

Das Bordnetz BN wird abhängig von der Größe der Systemlast L, also abhängig von der Höhe des Strombedarfs durch die dem Bordnetz BN zugeschalteten Stromverbraucher in drei verschiedenen Betriebszuständen betrieben. Diese drei Betriebszustände und Wechselvorgänge zwischen diesen Betriebszuständen werden nun nachfolgend beschrieben.

In einem ersten Betriebszustand im Bordnetz BN wird die Systemlast L von dem Generator G und dem ersten Energiespeicher ES1 mit Strom versorgt. In diesem Betriebszustand hält der erste Energiespeicher ES1 zusammen mit dem Generator G eine stabile Betriebsspannung im Bordnetz BN aufrecht. Der erste Schalter S1 wird von der Steuereinrichtung SE gesteuert im geschlossenen Zustand gehalten. Der zweite Schalter S2 wird von der Steuereinrichtung SE gesteuert im geöffneten Schaltzustand gehalten.

In einem zweiten Betriebszustand, in dem der Stromverbrauch im Bordnetz BN durch Zuschalten eines oder mehrerer leistungsstarken Stromverbraucher wie z. B. eines Anlassers für einen Verbrennungsmotor des Fahrzeugs FZ, in kurzer Zeit stark ansteigt, können der Generator G und der erste Energiespeicher ES1 den stark gestiegenen Strombedarf der Systemlast L allein nicht mehr bewältigen. Als Folge kann eine stabile Bordnetzspannung im Bordnetz BN nicht mehr weiter aufrecht erhalten werden und es droht ein Spannungseinbruch unter eine für eine einwandfreie Funktion aller Stromverbraucher minimal erforderliche Betriebsspannung. In diesem Fall wird das zweite Energiesystem Esys2 bzw. der zweite Energiespeicher ES2 dem Bordnetz BN zugeschaltet. Das Einschalten des zweiten Energiespeichers ES2 in das Bordnetz BN geschieht durch zeitgleiches Umschalten der beiden Schalter S1 und S2 durch die Steuereinrichtung SE. Durch Öffnen des ersten Schalters S1 und zugleich Schließen des zweiten Schalters S2 verbindet die Steuereinrichtung SE den zweiten Energiespeicher ES2 mit dem ersten Energiespeicher ES1 und der Systemlast L und stellt so einen zweiten geschlossenen Stromkreis vom ersten Energiespeicher ES1 über den zweiten Energiespeicher ES2 zur Systemlast L her. Folglich wird die Systemlast L von dem Generator G und den beiden Energiespeichern ES1, ES2 mit Strom versorgt. In dem ersten Betriebszustand, in dem der zweite Energiespeicher ES2 nicht dem Bordnetz BN zugeschaltet ist, wird dieser bei Bedarf mit Strom von dem Generator G oder von dem ersten Energiespeicher ES1 aufgeladen. Dabei überwacht und steuert die Nachladeeinrichtung NL den Aufladevorgang.

Tritt jedoch ein Systemfehler in der Nachladeeinrichtung NL oder in der elektrischen Verbindung zwischen dem vierten und dem dritten Anschluss K4 und K3, somit zwischen dem Generator G bzw. dem ersten Energiespeicher ES1 und dem zweiten Energiespeicher ES2 ein, entsteht ein unkontrollierter Stromfluss, also ein unkontrollierbarer Ladestrom Ils von dem Generator G und/oder von dem ersten Energiespeicher ES1 über die elektrische Verbindung zwischen dem vierten und dem dritten Anschluss K4, K3 und zu dem zweiten Energiespeicher ES2. In Folge dessen wird der zweite Energiespeicher ES2 aufgeladen und es steigt der Ladespannungswert Ves2 am zweiten Energiespeicher ES2 unkontrolliert über die maximal zulässige Ladespannung hinaus und bis auf das Spannungspotential Ves1 am ersten Energiespeicher ES1. Das führt zu einem Überladen des zweiten Energiespeichers ES2 und folglich zu einem Ausfall des zweiten Energiespeichers ES2.

Um in einem solchen fehlerhaften Systemzustand ein Überladen des zweiten Energiespeichers ES2 zu verhindern und somit den zweiten Energiespeicher ES2 vor dem Ausfall zu bewahren, misst die Spannungsmesseinheit SM der Überwachungseinrichtung ÜE über die Anschlüsse K3, K2 und in vorgegebenen Zeitabständen den Ladespannungswert Ves2 des zweiten Energiespeichers ES2.

Der gemessene Ladespannungswert Ves2 wird von der Spannungsmesseinheit SM an die Komparatoreinheit KP weitergeleitet. Die Komparatoreinheit KP vergleicht dann den Ladespannungswert Ves2 mit einem vorgegebenen, in einer in dieser Figur nicht näher dargestellten Speichereinheit der Steuervorrichtung ST gespeicherten, Spannungsschwellwert TH und gibt das Vergleichsergebnis in Form von einem Ausgangssignal S101 mit einem dem Vergleichsergebnis entsprechenden Signalpegel an die Steuereinrichtung SE.

Ist der Ladespannungswert Ves2 kleiner oder gleich dem Spannungsschwellwert TH, so hat das Ausgangssignal S101 einen Signalpegel von logisch NULL. Überschreitet der Ladespannungswert Ves2 den Spannungsschwellwert TH, so nimmt das Ausgangssignal S101 einen Signalpegel von logisch EINS an.

Das Ausgangssignal S101 der Überwachungseinrichtung ÜE wird nun von der Steuereinrichtung SE über den Signaleingang K21 erhalten. Abhängig von dem Signalpegel dieses Ausganssignals S101 steuert dann die Steuereinrichtung über die beiden Ausgangssignale S111 und S112 die beiden Schalter S1 und S2.

Erhält die Steuereinrichtung SE das Ausgangssignal S101 mit einem Signalpegel von logisch NULL, so steuert diese die beiden Schalter S1, S2 abhängig von dem aktuellen Betriebszustand des Bordnetzes BN, also abhängig davon, wie groß der Strombedarf im Bordnetz BN ist.

Erhält die Steuereinrichtung SE das Ausgangssignal S101 mit einem Signalpegel von logisch EINS, so schließt diese die beiden Schalter S1, S2 unabhängig von dem aktuellen Betriebszustand des Bordnetzes BN, also unabhängig davon, welche Schaltzustände diese beiden Schalter S1, S2 in diesem aktuellen Betriebszustand haben sollen. Hierzu setzt die Steuereinrichtung SE die Signalpegel der beiden Ausgangssignale S111, S112 auf logisch EINS und schließt so die beiden Schalter S1, S2. Befindet sich das Bordnetz BN im ersten Betriebszustand und liegt das erste Ausgangssignal S111 bereits auf Signalpegel von logisch EINS, so behält die Steuereinrichtung SE bei diesem Ausgangssignal S111 den Signalpegel und setzt lediglich das zweite Ausgangssignal S112 auf den Signalpegel von logisch EINS. Dadurch behält die Steuereinrichtung SE den einen Schalter S1 im geschlossen Schaltzustand, welcher sich vor Erkennen einer Überladesituation beim zweiten Energiespeicher ES2 bereit im geschlossenen Schaltzustand befindet, und schließt den anderen Schalter S2 zusätzlich.

Als Folge werden die Anschlüsse K3, K1 und K2 zueinander elektrisch kurzgeschlossen und es wird ein geschlossener, dritter Stromkreis vom Pluspol des zweiten Energiespeichers ES2 zu der elektrischen Masse MS gebildet. Folglich wird der zweite Energiespeicher ES2 über diesen geschlossenen dritten Stromkreis entladen. Vorzugsweise geschieht das Entladen über die elektrische Masse MS, beispielsweise über die hier nicht näher dargestellte Fahrzeugkarosserie, welche auch mit Klemme 31 bezeichnet wird, wobei die überschussige elektrische Ladung von dem zweiten Energiespeicher ES2 über diesen geschlossenen dritten Stromkreis zur Masse MS abgeführt wird.

Der Ladestrom Ils vom Anschluss K4 zum Anschluss K3 bzw. zu dem zweiten Energiespeicher ES2 wird über die elektrische Verbindung von dem dritten Anschluss K3 über den ersten und den zweiten Anschluss K1, K2 zur elektrischen Masse MS abgeführt.

Dadurch wird der zweite Energiespeicher ES2 in zwei Hinsichten vor einem Überladen geschützt. Zum Einen wird die überschüssige elektrische Ladung im zweiten Energiespeicher ES2 durch kontrollierte Entladung vom zweiten Energiespeicher ES2 abgeführt und in Bezug auf eine Überladung des zweiten Energiespeichers ES2 unschädlich gemacht. Zum Anderen wird der Strom Ils, der durch Systemfehler in der elektrischen Verbindung unkontrolliert von dem Generator G bzw. dem ersten Energiespeicher ES1 zu dem zweiten Energiespeicher ES2 fließt, abgeführt und ebenfalls unschädlich gemacht.

Sobald der Ladespannungswert Ves2 den Spannungsschwellwert TH wieder unterschreitet oder sobald der Entladestrom einen vorgegebenen Stromschwellwert unterschreitet oder sobald eine vorgegebene Zeitdauer verstrichen ist, setzt die Überwachungseinrichtung ÜE den Signalpegel des Ausgangssignals S101 von logisch EINS wieder auf logisch NULL.

Erhält die Steuereinrichtung SE das Ausgangssignal S101 mit einem Signalpegel von logisch NULL, so steuert diese die beiden Schalter S1, S2 wieder abhängig von dem aktuellen Betriebszustand des Bordnetzes BN, also abhängig davon, wie groß der Strombedarf im Bordnetz BN aktuell ist.

In einer alternativen Ausführungsform erfasst die Überwachungseinrichtung ÜE neben dem Ladespannungswert Ves2 noch weitere Parameter wie z. B. Temperatur, am zweiten Energiespeicher ES2, deren Spannungswerteänderung zu einer Veränderung der Ladekapazität des zweiten Energiespeichers ES2 führen. Anhand des Ladespannungswertes Ves2 und der aktuell erfassten Parameterwerte erkennt die Überwachungseinrichtung ÜE dann, ob der zweite Energiespeicher ES2 vollständig aufgeladen ist, oder überladen zu werden droht.

Anhand dieser Informationen, die die Überwachungseinrichtung ÜE aus dem Ladespannungswert Ves2 und aus weiteren Parameterwerten erfasst hat, berechnet die Überwachungseinrichtung ÜE die erforderliche Zeitdauer T zum Entladen des zweiten Energiespeichers ES2 und setzt das Ausgangssignal S101 für diese Zeitdauer T auf den Signalpegel von logisch EINS. Folglich wird der zweite Energiespeicher ES2 nur für die Zeitdauer T entladen, die erforderlich ist, die überschüssigen elektrischen Ladungen von dem zweiten Energiespeicher ES2 zu entfernen.

Alternativ kann ein derartiges Überladen des zweiten Energiespeichers von Vornherein mit einer Spannungsbegrenzungsschaltung mit Überspannungsschutz oder einer zusätzlichen Thyristor-Schaltung mit oder ohne Schmelzsicherung vermieden werden, welche in den elektrischen Verbindungen zwischen den beiden Energiesystemen angeordnet werden können. Beim Erreichen eines vorgegebenen Ladespannungswertes bei dem zweiten Energiespeicher unterbinden diese Schaltungen den Stromfluss von dem Generator bzw. von dem ersten Energiesystem zu dem zweiten Energiesystem und verhindern so ein Überladen des zweiten Energiespeichers.

## Patentansprüche

1. Bordnetz (BN) für ein Fahrzeug (FZ), mit folgenden Merkmalen:
- einer Systemlast (L) mit zumindest einem Stromverbraucher,
- einem ersten Energiespeicher (ES1) zum Bereitstellen von Strom für die Systemlast (L),
- einem zweiten Energiespeicher (ES2) zum Bereitstellen von Strom für die Systemlast (L), wobei der zweite Energiespeicher (ES2) wiederaufladbar ist,
- einem ersten, steuerbaren Schalter (S1), der in einem geschlossenen Schaltzustand einen ersten, geschlossenen Stromkreis von dem ersten Energiespeicher (ES1) zu der Systemlast (L) herstellt,
- einem zweiten, steuerbaren Schalter (S2), der in einem geschlossenen Schaltzustand einen zweiten, geschlossenen Stromkreis von dem ersten Energiespeicher (ES1) über den zweiten Energiespeicher (ES2) zu der Systemlast (L) herstellt,
- einer Überwachungseinrichtung (ÜE) zum Erfassen eines Spannungswertes (Ves2) am zweiten Energiespeicher (ES2) und zum Vergleichen des aktuell erfassten Spannungswertes (Ves2) mit einem vorgegebenen Spannungsschwellwert (TH), und mit folgenden kennzeichnenden Merkmalen:
- einer Steuereinrichtung (SE) zur Herstellung eines dritten, geschlossenen Stromkreises von dem zweiten Energiespeicher (ES2) über den ersten Schalter (S1) und den zweiten Schalter (S2), insbesondere zu einer elektrischen Masse (MS), durch Schließen des ersten (S1) und des zweiten (S2) Schalters und somit zum Entladen des zweiten Energiespeichers (ES2), wenn der aktuell erfasste Spannungswert (Ves2) den Spannungsschwellwert (TH) überschreitet.

2. Bordnetz (BN) nach Anspruch 1, das ferner eine Nachladeeinrichtung (NL) zum Aufladen des zweiten Energiespeichers (ES2) mit einem Ladestrom (Ils) von dem ersten Energiespeicher (ES1) aufweist.

3. Bordnetz (BN) nach Anspruch 2, wobei die Steuereinrichtung (SE) ferner dafür ausgelegt ist, wenn der aktuell erfasste Spannungswert (Ves2) den Spannungsschwellwert (TH) überschreitet, den Ladestrom (Ils) über den ersten, geschlossenen (SW1) und den zweiten, geschlossenen (SW2) Schalter zu der elektrischen Masse (MS) abzuleiten.

4. Bordnetz nach einem der vorangehenden Ansprüche, wobei die Überwachungseinrichtung (ÜE) den Spannungsschwellwert (TH) abhängig von zumindest einem auf der Ladekapazität des zweiten Energiespeichers (ES2) bezogenen Parameter vorgibt.

5. Bordnetz nach einem der vorangehenden Ansprüche, wobei die Steuereinrichtung (SE) den ersten (S1) und den zweiten (S2) Schalter im geschlossenen Schaltzustand für eine vorgegebene Zeitdauer (T) hält, wobei die Steuereinrichtung (SE) die Zeitdauer (T) in Abhängigkeit von dem aktuell erfassten Spannungswert (Ves2) in Vergleich mit dem Spannungsschwellwert (TH) vorgibt.

6. Steuervorrichtung (ST) zum Steuern eines Stromflusses in einem Bordnetz (BN), mit folgenden Merkmalen:
- einem ersten (K1), einem zweiten (K2), einem dritten (K3) elektrischen Anschluss zur Herstellung von elektrischen Verbindungen von der Steuervorrichtung (ST) zu dem Bordnetz (BN),
- einem ersten, zwischen dem ersten (K1) und dem zweiten Anschluss (K2) angeordneten, steuerbaren Schalter (S1), welcher in einem geschlossenen Schaltzustand den ersten Anschluss (K1) mit dem zweiten Anschluss (K2) elektrisch verbindet,
- einem zweiten, zwischen dem ersten (K1) und dem dritten Anschluss (K3) angeordneten, steuerbaren Schalter (S2), welcher in einem geschlossenen Schaltzustand den ersten Anschluss (K1) mit dem dritten Anschluss (K3) elektrisch verbindet,
- einer Überwachungseinrichtung (ÜE) zum Erfassen eines Spannungswertes (Ves2) zwischen dem dritten (K3) und dem zweiten (K2) Anschluss und zum Vergleichen des aktuell erfassten Spannungswertes (Ves2) mit einem vorgegebenen Spannungsschwellwert (TH),
und mit folgenden kennzeichnenden Merkmalen: - einer Steuereinrichtung (SE) zum Schließen des ersten (S1) und des zweiten (S2) Schalters bzw. zum Halten des ersten (S1) und des zweiten (S2) Schalters in einem geschlossenen Schaltzustand, wenn der aktuell erfasste Spannungswert (Ves2) den Spannungsschwellwert (TH) überschreitet.

7. Fahrzeug (FZ) mit einem Bordnetz (BN) nach einem der Ansprüche 1 bis 5.

## Claims

1. On-board electrical system (BN) for a vehicle (FZ), having the following features:
- a system load (L) with at least one power consumer,
- a first energy store (ES1) for providing current for the system load (L),
- a second energy store (ES2) for providing current for the system load (L), the second energy store (ES2) being rechargeable,
- a first, controllable switch (S1), which produces a first, closed circuit from the first energy store (ES1) to the system load (L) in a closed switching state,
- a second, controllable switch (S2), which produces a second closed circuit from the first energy store (ES1) via the second energy store (ES2) to the system load (L) in a closed switching state,
- a monitoring device (ÜE) for detecting a voltage value (Ves2) at the second energy store (ES2) and for comparing the presently detected voltage value (Ves2) with a predetermined voltage threshold value (TH),
and having the following characterizing features:
- a control device (SE) for producing a third, closed circuit from the second energy store (ES2) via the first switch (S1) and the second switch (S2), in particular to an electrical ground (MS), by closing the first switch (S1) and the second switch (S2) and therefore for discharging the second energy store (ES2) when the presently detected voltage value (Ves2) exceeds the voltage threshold value (TH).

2. On-board electrical system (BN) according to Claim 1, which further has a recharging device (NL) for charging the second energy store (ES2) with a charging current (Ils) from the first energy store (ES1).

3. On-board electrical system (BN) according to Claim 2, wherein the control device (SE) is further designed to discharge the charging current (Ils) via the first, closed switch (SW1) and the second, closed switch (SW2) to the electrical ground (MS) when the presently detected voltage value (Ves2) exceeds the voltage threshold value (TH).

4. On-board electrical system according to one of the preceding claims, wherein the monitoring device (ÜE) predetermines the voltage threshold value (TH) depending on at least one parameter related to the charge capacity of the second energy store (ES2).

5. On-board electrical system according to one of the preceding claims, wherein the control device (SE) keeps the first switch (S1) and the second switch (S2) in the closed switching state for a predetermined period of time (T), wherein the control device (SE) predetermines the period of time (T) depending on the presently detected voltage value (Ves2) in comparison with the voltage threshold value (TH).

6. Control apparatus (ST) for controlling a current flow in an on-board electrical system (BN), having the following features:
- a first electrical terminal (K1), a second electrical terminal (K2) and a third electrical terminal (K3) for producing electrical connections between the control apparatus (ST) and the on-board electrical system (BN),
- a first controllable switch (S1), which is arranged between the first terminal(K1) and the second terminal (K2) and which electrically connects the first terminal (K1) to the second terminal (K2) in a closed switching state,
- a second controllable switch (S2), which is arranged between the first terminal (K1) and the third terminal (K3) and which electrically connects the first terminal (K1) to the third terminal (K3) in a closed switching state,
- a monitoring device (ÜE) for detecting a voltage value (Ves2) between the third terminal (K3) and the second terminal (K2) and for comparing the presently detected voltage value (Ves2) with a predetermined voltage threshold value (TH),
and having the following characterizing features:
- a control device (SE) for closing the first switch (S1) and the second switch (S2) or for holding the first switch (S1) and the second switch (S2) in a closed switching state when the presently detected voltage value (Ves2) exceeds the voltage threshold value (TH).

7. Vehicle (FZ) with an on-board electrical system (BN) according to one of Claims 1 to 5.

## Revendications

1. Réseau de bord (BN) pour un véhicule (FZ), présentant les caractéristiques qui suivent :
- une charge de système (L) comprenant au moins un consommateur de courant électrique,
- un premier accumulateur d'énergie (ES1) servant à fournir du courant électrique pour la charge de système (L),
- un deuxième accumulateur d'énergie (ES2) servant à fournir du courant électrique pour la charge de système (L), le deuxième accumulateur d'énergie (ES2) pouvant être rechargé,
- un premier commutateur (S1) pouvant être commandé, qui établit, dans un état de commutation fermé, un premier circuit de courant électrique fermé entre le premier accumulateur d'énergie (ES1) et la charge de système (L),
- un deuxième commutateur (S2) pouvant être commandé, qui établit, dans un état de commutation fermé, un deuxième circuit de courant électrique fermé entre le premier accumulateur d'énergie (ES1) et la charge de système (L) en passant par le deuxième accumulateur d'énergie (ES2),
- un dispositif de surveillance (ÜE) servant à détecter une valeur de tension (Ves2) au niveau du deuxième accumulateur d'énergie (ES2) et servant à comparer la valeur de tension détectée du moment (Ves2) à une valeur seuil de tension (TH) prédéfinie,
et présentant les caractéristiques suivantes :
- un dispositif de commande (SE) servant à établir un troisième circuit de courant électrique fermé entre le deuxième accumulateur d'énergie (ES2) et, en particulier, une masse (MS) électrique, en passant par le premier commutateur (S1) et par le deuxième commutateur (S2), en fermant le premier commutateur (S1) et le deuxième commutateur (S2) et ce faisant servant à décharger le deuxième accumulateur d'énergie (ES2), lorsque la valeur de tension (Ves2) détectée du moment dépasse la valeur seuil de tension (TH).

2. Réseau de bord (BN) selon la revendication 1, qui présente en outre un dispositif de recharge (NL) servant à charger le deuxième accumulateur d'énergie (ES2) avec un courant électrique de charge (Ils) en provenance du premier accumulateur d'énergie (ES1).

3. Réseau de bord (BN) selon la revendication 2, le dispositif de commande (SE) étant configuré en outre pour dévier le courant électrique de charge (Ils) par l'intermédiaire du premier commutateur fermé (SW1) et par l'intermédiaire du deuxième commutateur fermé (SW2) vers la masse (MS) électrique lorsque la valeur de tension (Ves2) détectée du moment dépasse la valeur seuil de tension (TH).

4. Réseau de bord selon l'une quelconque des revendications précédentes, le dispositif de surveillance (ÜE) prédéfinissant la valeur seuil de tension (TH) en fonction d'au moins un paramètre en rapport avec la capacité de charge du deuxième accumulateur d'énergie (ES2).

5. Réseau de bord selon l'une quelconque des revendications précédentes, le dispositif de commande (SE) maintenant le premier commutateur (S1) et le deuxième commutateur (S2) dans un état de commutation fermé pour une durée (T) prédéfinie, le dispositif de commande (SE) prédéfinissant la durée (T) en fonction de la valeur de tension (Ves2) détectée du moment en comparaison avec la valeur seuil de tension (TH).

6. Dispositif de commande (ST) servant à commander un flux de courant électrique dans un réseau de bord (BN), présentant les caractéristiques suivantes :
- un premier raccord (K1), un deuxième raccord (K2), un troisième raccord (K3) électriques servant à établir des connexions électriques entre le dispositif de commande (ST) et le réseau de bord (BN),
- un premier commutateur (S1) pouvant être commandé, disposé entre le premier raccord (K1) et le deuxième raccord (K2), lequel connecte de manière électrique, dans un état de commutation fermé, le premier raccord (K1) au deuxième raccord (K2),
- un deuxième commutateur (S2) pouvant être commandé, disposé entre le premier raccord (K1) et le troisième raccord (K3), lequel connecte de manière électrique, dans un état de commutation fermé, le premier raccord (K1) au troisième raccord (K3),
- un dispositif de surveillance (ÜE) servant à détecter une valeur de tension (Ves2) entre le troisième raccord (K3) et le deuxième raccord (K2) et servant à comparer la valeur de tension (Ves2) détectée du moment à une valeur seuil de tension (TH) prédéfinie,
et présentant les caractéristiques suivantes :
- un dispositif de commande (SE) servant à fermer le premier commutateur (S1) et le deuxième commutateur (S2) ou servant à maintenir le premier commutateur (S1) et le deuxième commutateur (S2) dans un état de commutation fermé, lorsque la valeur de tension (Ves2) détectée du moment dépasse la valeur seuil de tension (TH).

7. Véhicule (FZ) comprenant un réseau de bord (BN) selon l'une quelconque des revendications 1 à 5.
